(19) **Europäisches Patentamt**

**European Patent Office**

**Office européen des brevets**

(11) **EP 0 949 093 B1**

(12) **EUROPÄISCHE PATENTSCHRIFT**

(45) Veröffentlichungstag und Bekanntmachung des Hinweises auf die Patenterteilung:
**25.09.2002 Patentblatt 2002/39**

(51) Int Cl.⁷: **B60G 21/05**, B60G 7/00

(21) Anmeldenummer: **99104065.0**

(22) Anmeldetag: **17.03.1999**

(54) **Aufhängung einer Starrachse in einem Fahrzeug, insbesondere Nutzfahrzeug**

Rigid axle suspension for a vehicle, in particular utility vehicle

Suspension d'un essieu pour un véhicule, notamment véhicule utilitaire

(84) Benannte Vertragsstaaten:
**DE FR IT NL SE**

(30) Priorität: **08.04.1998 DE 19815776**

(43) Veröffentlichungstag der Anmeldung:
**13.10.1999 Patentblatt 1999/41**

(73) Patentinhaber: **MAN Nutzfahrzeuge Aktiengesellschaft**
**80976 München (DE)**

(72) Erfinder:
• **Schmitt, Peter, Dipl.-Ing.**
**80937 München (DE)**
• **Lutsch, Helmar, Dipl.-Ing.**
**81927 München (DE)**
• **Dresig, Horst, Dr., Dipl.-Ing.**
**82152 Planegg (DE)**
• **Weber, Klaus, Dipl.-Ing.**
**80995 München (DE)**
• **Breitling, Ulrich, Dr.-Ing.**
**81245 München (DE)**
• **Übelacker, Andreas, Dipl.-Ing. (TU)**
**82282 Unterschweinbach (DE)**

(56) Entgegenhaltungen:
**DE-A- 19 521 874        US-A- 5 338 056**

**Beschreibung**

Die Erfindung betrifft die Aufhängung einer Starrachse in einem Fahrzeug, insbesondere Nutzfahrzeug, mit Merkmalen, wie im Oberbegriff des Anspruchs 1 angegeben.

Die Erfindung geht aus von einer aus der gattungsbildenden WO 97/00176 bzw. EP 0 776 275 A1 oder der hierzu prioritätsbegründenden DE 195 21 874 A1 bekannten Starrachs-Aufhängung. Dort ist ein 4-Punkt-Lenker vorgesehen, der über seine Lenkerfunktion hinaus auch als Stabilisierungseinrichtung dienen soll. In einer Ausführungsvariante ist der 4-Punkt-Lenker als Kreuz mit definierter Kennlinie für die durch Verwindungen hervorgerufenen Torsionsspannungen ausgebildet. Das Querschnittsprofil der gekreuzten Arme - so heißt es in der Beschreibung - wird den Gegebenheiten angepaßt und kann beispielsweise doppel-T-förmig sein oder aus einem Hohlprofil bestehen. In jedem Fall ist davon auszugehen, daß die einzelnen Arme bzw. deren sich beiderseits eines Kreuzzentralbereiches anschließende Armabschnitte über ihre Länge gesehen zu den Lageraugen hin einen gleichbleibenden Querschnitt aufweisen. Eine solche Querschnittsgestaltung ist jedoch - wie Berechnungen zeigen - für bestimmte Anwendungsfälle, insbesondere in Achsführungen schwerer Nutzfahrzeuge, untauglich.

Es ist daher Aufgabe der Erfindung, als Teil einer Starrachs-Aufhängung für ein Fahrzeug, insbesondere schweres Nutzfahrzeug, einen 4-Punkt-Lenker bereitzustellen, der einfach herstellbar und im Fahrbetrieb in der Lage ist, alle auftretenden Kräfte sicher aufzunehmen bzw. in ihren Auswirkungen so zu begrenzen, daß ein hoher Fahrkomfort mit ausgezeichneter Wankstabilität erzielbar ist.

Diese Aufgabe ist erfindungsgemäß durch die Aufhängung einer Starrachse mit den im Anspruch 1 angegebenen Merkmalen gelöst.

Vorteilhafte Ausgestaltungen und Details der erfindungsgemäßen Lösung sind in den Unteransprüchen angegeben.

Der erfindungsgemäße 4-Punkt-Stabilisatorlenker zeichnet sich dadurch aus, daß er vergleichsweise einfach und damit kostengünstig herstellbar ist, andererseits aber auch den kräftemäßig sehr hohen Beanspruchungen gewachsen ist, die in einem Fahrzeug, insbesondere schweren Nutzfahrzeug wie Lastkraftwagen oder Omnibus, während des Fahrbetriebes auf ihn einwirken. Er überträgt gleichermaßen Längskräfte und Seitenkräfte und Rollmomente, wobei für die Wankstabilisierung insbesondere die Biegefestigkeit der sich kreuzenden und nach Art von Parabelfedern gestalteten Arme des 4-Punkt-Stabilisatorlenkers maßgeblich ist.

Nachstehend ist der erfindungsgemäße 4-Punkt-Stabilisatorlenker anhand eines in der Zeichnung dargestellten Beispiels noch näher erläutert. In der Zeichnung zeigen:

Fig. 1     eine Draufsicht auf das Fahrgestell eines Schwerlastkraftwagen im Bereich einer Hinterachse mit dem erfindungsgemäßen 4-Punkt-Stabilisatorlenker,

Fig. 2     eine Seitenansicht des hier vergrößert und allein dargestellten 4-Punkt-Stabilisatorlenkers aus Fig. 1,

Fig. 3     in Draufsicht den 4-Punkt-Stabilisatorlenker aus Fig. 1 vergrößert in Alleindarstellung, und

Fig. 4     ein mathematisch-physikalisches Ersatzbild für den erfindungsgemäßen 4-Punkt-Stabilisatorlenker.

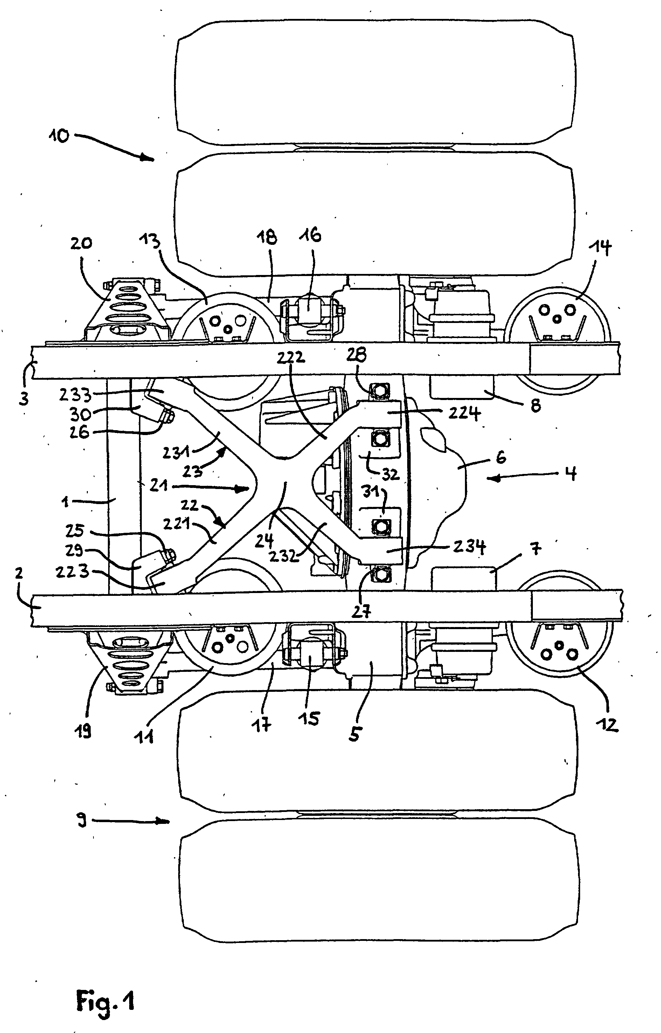

Das in Fig. 1 dargestellte Schwerlastkraftwagen-Fahrgestell weist einen Rahmen mit zwei durch mehrere Querträger 1 verbundenen Längsträgern 2, 3 auf. Die - hier angetriebene - Hinterachse 4 mit Starrachskörper 5, Differential 6, Bremszylindern 7, 8 und Zwillingsbereifungen 9,10 ist im dargestellten Fall je Achsseite mittels zweier Luftfederbälge 11, 12 bzw. 13, 14 und eines Stoßdämpfers 15 bzw. 16 gegenüber dem Rahmen 1, 2, 3 abgefedert

Zur Aufhängung der Starrachse 4 sind im dargestellten Beispiel zwei in einer unteren Höhenlage angeordnete Längslenker 17, 18 vorgesehen, von denen jeder einenendes an einem rahmenfesten Lagerbock 19, 20 und andernendes am Starrachskörper 5 angelenkt ist. In einer von der Höhenlage der Längslenker 17, 18 verschiedenen und relativ weit beabstandeten, hier weiter oben gegebenen Höhenlage ist ein 4-Punkt-Stabilisatorlenker 21 erfindungsgemäßer Bauart angeordnet. Dieser ist auf drei Funktionen ausgelegt, nämlich Längskraftaufnahme, Seitenkraftaufnahme und Wankstabilisierung, ist einstückig durch Gesenkschmieden aus geeignetem Stahlmaterial hergestellt und besteht aus zwei gekreuzten, in einer Ebene angeordneten Armen 22, 23 mit jeweils einem vorderen Armabschnitt 221, 231 und hinteren Armabschnitt 222, 232. Am äußerem freien Ende jedes dieser vier in einem Kreuzzentralbereich 24 ineinander übergehenden Armabschnitte ist ein Lagerauge 223, 224 bzw. 233, 234 angeordnet, in das im dargestellten Beispiel jeweils ein Pratzengelenk 25, 26, 27, 28 eingebaut ist. Über die beiden vorderen Pratzengelenke 25, 26 ist der 4-Punkt-Stabilisatorlenker 21 am Rahmen angelenkt, und zwar an Lagerböcken 29, 30, die zweckmäßigerweise an Verbindungsstellen von Querträger 1 zum jeweiligen Längsträger 2, 3 befestigt sind. Über die beiden-hinteren Pratzengelenke 27, 28, die an achskörperfesten Lagerböcken 31, 32 angelenkt sind, ist die Hinterachse 4 am 4-Punkt-Stabilisatorlenker 21 angeschlossen.

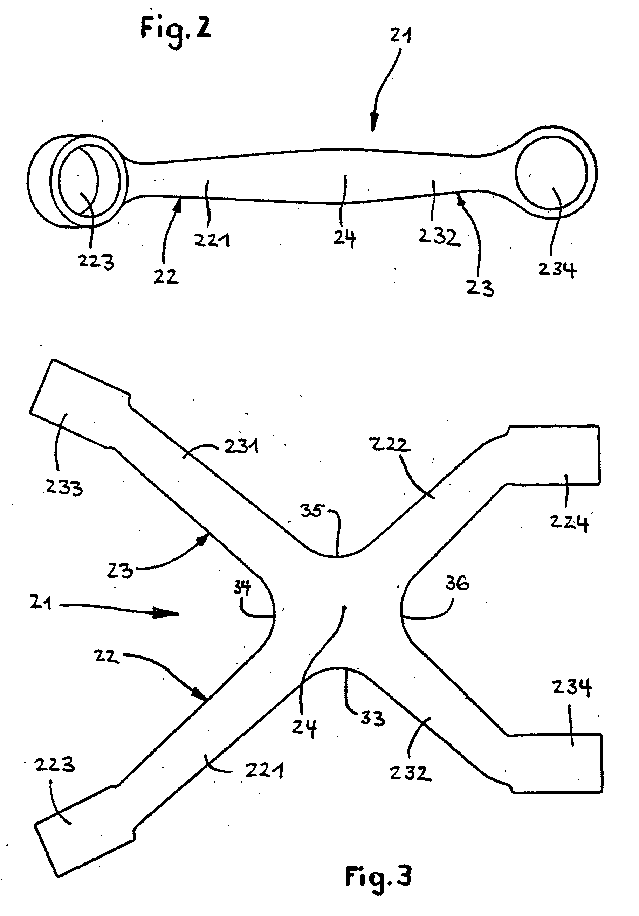

In Einbaulage im Fahrzeug geht die Fahrzeuglängsmittelhochebene durch das Zentrum des Kreuzzentralbereiches 24 des 4-Punkt-Stabilisatorlenkers 21 und außerdem sind dessen beiderseits der Fahrzeuglängsmittelhochebene gegebene Hälften vorzugsweise spiegelsymmetrisch zueinander ausgebildet. Die Achsen der beiden Pratzengelenke 27, 28 in den Lageraugen 224, 234, an denen die Starrachse 4 angelenkt ist, liegen zueinander fluchtend in einer zur Längsmittelachse der Starrachse 4 parallelen Linie. Die Achsen der beiden anderen in den Lageraugen 223, 233 eingebauten rahmenseitigen Pratzengelenke 25, 26 stehen - bezogen auf die Fahrzeuglängsmittelhochebene - spiegelsymmetrisch entweder senkrecht oder (wie im dargestellten Beispiel) unter leichtem spitzen Winkel zur Längsmittelachse des jeweiligen Armes 22, 23 bzw. rahmenseitigen Armabschnittes 221, 231. Ferner ist der Zentralbereich 24 des 4-Punkt-Stabilisatorlenkers 21 vorzugsweise so gestaltet, daß die Armabschnitte 221, 222, 231, 232 der beiden Arme 22, 23 mit ihren seitlichen Außenflächen über am Außenbereich des Kreuzzentralbereiches 24 gegebene Hohlkehlen 33, 34, 35, 36 (siehe Fig. 3) ineinander übergehen. Außerdem sind die beiden Arme 22, 23 des 4-Punkt-Stabilisatorlenkers 21 vorzugsweise so gestaltet, daß ihre beiden sich jeweils beiderseits des Kreuzzentralbereiches 24 anschließenden Armabschnitte 221 und 222 bzw. 231 und 232 in Längsrichtung zumindest annähernd zueinander fluchten und der Kreuzzentralbereich 24 etwa in der Mitte ihrer

Längsanlenkung angeordnet ist.

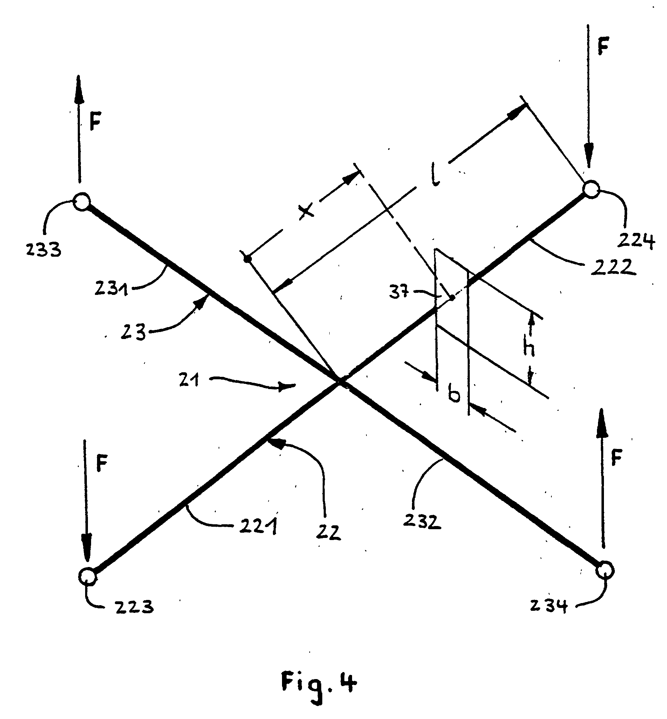

Entsprechend einem wesentlichen Kriterium der Erfindung sind die sich kreuzenden Arme 22, 23 des 4-Punkt-Stabilisatorlenkers 21 weitgehend nach Art von Parabelfedem gestaltet, also entsprechend einem Biegeträger gleicher Festigkeit bzw. gleicher Randspannung ausgelegt. Hierzu weisen die Arme 22, 23 beiderseits des den - in Vertikalrichtung gesehen - dicksten Abschnitt darstellenden Kreuzzentralbereiches 24 in ihren Armabschnitten 221, 222, 231, 232 jeweils einen im wesentlichen rechteckigen Querschnitt (siehe die schematische Fläche 37 in Fig. 4) mit über die Länge (Pfeil I in Fig. 4) gesehen unterschiedlicher, zu dem jeweiligen Lagerauge 223, 224, 233, 234 hin abnehmender Größe auf und leiten während des Fahrbetriebes auftretende Normalkräfte (siehe Pfeile F in Fig. 4) zur Wankstabilisierung der Fahrzeugaufbauten in den Kreuzzentralbereich 24 ein.

Hierzu nachfolgend noch einige theoretische Betrachtungen unter Zuhilfenahme von Fig. 4:

1) Auslegung des 4-Punkt-Stabilisatorlenkers 21 hinsichtlich Biegesteifigkeit:
Für die Querschnitte der Armabschnitte 221, 222 und 231, 232 der beiden Arme 22, 23 sind überwiegend Biegebeanspruchungen aus der Wankstabilisierung maßgebend. Vereinfacht dargestellt ergibt sich

a) für das Biegemoment $M_b$:

$$M_b(x) = F \cdot (l - x) = F \cdot l \cdot \left(1 - \frac{x}{l}\right) \; ;$$

b) für die Biegespannung $\sigma_b$:

$$\sigma_b(x) = \frac{M_b(x)}{W_b(x)} = \frac{6 \cdot F \cdot l \cdot \left(1 - \frac{x}{l}\right)}{b(x) \cdot h^2(x)} \; ;$$

c) für die konstante Maximalspannung $\sigma_o$:

$$\sigma_b(x) = \sigma_o = \frac{6 \cdot F \cdot l}{b_o \cdot h_o^2} \cdot \frac{\left(1 - \frac{x}{l}\right)}{\dfrac{b(x)}{b_o} \cdot \dfrac{h^2(x)}{h_o^2}} \; ;$$

mit linearem Breitenverlauf

$$b(x) = b_o \left[ 1 - \left( 1 - \frac{b_l}{b_o} \right) \frac{x}{l} \right] \; ;$$

$$h^2(x) = h_o^2 \; \frac{1 - \frac{x}{l}}{1 - \left( 1 - \frac{b_l}{b_o} \right) \frac{x}{l}} \; ;$$

$$h(x) = h_o \sqrt{\frac{1 - \frac{x}{l}}{1 - \left( 1 - \frac{b_l}{b_o} \right) \frac{x}{l}}} \; ;$$

Grenzfälle:

1) $\quad b_l = o \rightarrow h(x) = h_o = const.$

2) $\quad b_l = b_o \rightarrow h(x) = h_o \sqrt{1 - \frac{x}{l}} \rightarrow Parabelfeder$

2) Die Auslegung des 4-Punkt-Stabilisatorlenkers 21 wird für den jeweiligen Anwendungsfall an das betreffende Fahrzeug bzw. den Fahrzeugtyp angepaßt und z. B. über Finit Elemente Analyse (FEA) durchgeführt.

3) Aus konstruktiven Gründen können lokale Abweichungen jeder Armachse von der Verbindungsgeraden zwischen den jeweiligen beiden endseitigen Anschlußpunkten (Lageraugen 223, 224 bzw. 233, 234) auftreten, woraus entsprechende Zusatzbeanspruchungen aus Torsion resultieren.

4) Aus der Querkraftbiegung ergeben sich während des Fahrbetriebes im 4-Punkt-Stabilisatorlenker 21 außerdem Querkraft-Schubbeanspruchungen. Aus der Längs- und Seitenkraftbeanspruchung des 4-Punkt-Stabilisatorlenkers 21 folgen Normalkräfte, denen sich Zusatzbeanspruchungen aus Bauteil- bzw. Lagerlastizitäten überlagern können. Schließlich sind lokale Spannungen aus Krafteinleitungen zu berücksichtigen.

5) Es ist möglich, die Größe der Wankstabilisierung innerhalb bestimmter Grenzen bei konstanter Biegebeanspruchung des 4-Punkt-Stabilisatorlenkers 21 zu variieren. Man erhält als Umrechnungsvorschrift für jeden Arm-Querschnitt:

$$J_2 = k \cdot J_1; \qquad k = \textit{Änderungsfaktor Wanksteifigkeit}$$

$$b_2 \cdot h_2^3 = k \cdot b_1 \cdot h_1^3 \; ; \qquad \textit{Nebenbedingung = konst. Spannung d.h.,}$$

$$b^2 \cdot h_2^2 = b_1 \cdot h_1^2$$

$$h_2 = k \cdot h_1 \text{ und dabei} \qquad b_2 = \frac{b_1}{k^2} \; ;$$

## Patentansprüche

1. Aufhängung einer Starrachse in einem Fahrzeug, insbesondere Nutzfahrzeug wie Lastkraftwagen oder Omnibus, mit je Fahrzeugseite einem Längslenker (17, 18), der in einer bestimmten Höhenlage einerseits am Starrachskörper (5), andererseits am Fahrzeugrahmen (1, 2, 3) angelenkt ist, und mit einem einstückigen 4-Punkt-Stabilisatorlenker(21), der auf drei Funktionen, nämlich Längskraftaufnahme, Seitenkraftaufnahme sowie Wankstabilisierung ausgelegt ist und aus zwei gekreuzten, in einer Ebene angeordneten Armen (22, 23) mit an jedem Ende einem Lagerauge und darin eingebautem Gelenk besteht, mit denen er einenendes am Starrachskörper in einer von den Anlenkstellen der Längslenker verschiedenen Höhenlage und andernendes an rahmenfesten Stellen angelenkt ist, **dadurch gekennzeichnet, dass** der 4-Punkt-Stabilisatorlenker (21) durch ein einstückiges Gesenkschmiedeteil gebildet ist, dessen gekreuzte Arme (22, 23)

   - in einem Kreuzzentralbereich (24) ineinander übergehen,

   - weitgehend nach Art von Parabelfedern entsprechend einem Biegeträger gleicher Festigkeit bzw. gleicher Randspannung ausgelegt sind,

   - beiderseits des den dicksten Teil darstellenden Kreuzzentralbereiches (24) in den betreffenden Armabschnitten (221, 222 bzw. 231, 232) einen im wesentlichen rechteckigen Querschnitt mit über die Länge gesehen unterschiedlicher, zum jeweils außenendigen Lagerauge (223, 224 bzw. 233, 234) hin abnehmender Größe aufweisen, und

   - auftretende Normalkräfte zur Wankstabilisierung in den Kreuzzentralbereich (24) einleiten.

2. Aufhängung nach Anspruch 1, **dadurch gekennzeichnet, daß** die beiden sich beiderseits des Kreuzzentralbereiches (24) anschließenden Abschnitte (221, 222 bzw. 231, 232) eines jeden Armes (22, 23) des 4-Punkt-Stabilisatorlenkers (21) in Arm-Längsrichtung zumindest annähernd fluchtend zueinander verlaufen.

3. Aufhängung nach Anspruch 1, **dadurch gekennzeichnet, daß** der Kreuzzentralbereich (24) des 4-Punkt-Stabilisatorlenkers (21) etwa in der Mitte der Längserstreckung von dessen beiden Armen (22, 23) angeordnet ist.

4. Aufhängung nach Anspruch 1, **dadurch gekennzeichnet, daß** die Armabschnitte (221, 222 bzw. 231, 232) der beiden Arme (22, 23) des 4-Punkt-Stabilisatorlenkers (21) mit ihren seitlichen Außenflächen über am Außenbereich des Kreuzzentralbereiches (24) gegebene Hohlkehlen (33, 34, 35, 36) ineinander übergehen.

5. Aufhängung nach Anspruch 1, **dadurch gekennzeichnet, daß** der Anschluß des 4-Punkt-Stabilisatorlenkers (21) an den Rahmen (1, 2, 3) und die Starrachse (4) über vier Pratzengelenke (25, 26, 27, 28) erfolgt, von denen jedes in eines der vier Lageraugen (223, 224 bzw. 223, 234) eingebaut ist, wobei die Achsen der beiden achsseitigen Pratzengelenke (27, 28) in den Lageraugen (224, 234) zueinander fluchtend in einer zur Längsmittelachse der Starrachse (4) parallelen Linie liegen, dagegen die Achsen der beiden rahmenseitigen Pratzengelenke (25, 26) im jeweils aufnehmenden Lagerauge (223, 233) - bezogen auf die durch das Zentrum des Kreuzzentralbereiches (24) gehende Fahrzeuglängsmittelhochebene - spiegelsymmetrisch entweder senkrecht oder unter leichtem spitzen Winkel zur Längsmittelachse des jeweiligen Armes (22, 23) bzw. rahmenseitigen Armabschnittes (221, 231) stehen.

6. Aufhängung nach Anspruch 1, **dadurch gekennzeichnet, daß** die Fahrzeuglängsmittelhochebene durch das Zentrum des Kreuzzentralbereiches (24) des 4-Punkt-Stabilisatorlenkers (21) geht und dessen beiderseits der Fahrzeuglängsmittelhochebene gegebene Hälften spiegelsymmetrisch zu letzterer ausgebildet sind.

## Claims

1. Suspension of a rigid axle in a vehicle, particularly a commercial vehicle such as a truck or bus, with one longitudinal arm (17, 18) on both sides of the vehicle, which longitudinal arm (17, 18) is, with its one end, pivoted at a certain height on the rigid axle body (5) and, with the other, on the vehicle frame (1, 2, 3), and with a single-piece 4-point stabiliser arm (21) designed for three functions, namely longitudinal force absorption, lateral force absorption and roll stabilisation, and consisting of two crossed arms (22, 23) arranged in one plane, each end provided with a bearing eye in which a joint is installed, with which crossed arms (22, 23) the one end of the 4-point stabiliser arm (21) is located on the rigid axle body in a height position different from that of the locating points for the longitudinal arms and the other end on points firmly fitted to the frame, **characterised in that** the 4-point stabilising arm (21) is formed as a single-piece drop-forged part, whose crossed arms (22, 23)

- merge in a cross central area (24),

- are largely designed in the manner of parabolic springs modelled on a bending beam of equal strength and edge stress,

- have an essentially rectangular cross-section in the respective arm sections (221, 222 and 231, 232) on both sides of the cross central area (24) forming the thickest part, the size of which cross-section varies over the length of said arm sections (221, 222 and 231, 232) and is smaller towards the bearing eye (223, 224 and 233, 234) at the respective outer end, and

- transmit occurring normal forces to the cross central area (24) for roll stabilisation.

2. Suspension according to Claim 1, **characterised in that** the two sections (221, 222 and 231, 232) of each arm (22, 23) of the 4-point stabiliser arm (21) adjoining the cross central area (24) converge in at least an approximately aligned manner in arm longitudinal direction.

3. Suspension according to Claim 1, **characterised in that** the cross central area (24) of the 4-point stabiliser arm (21) is arranged approximately in the centre of the longitudinal extension of its two arms (22, 23).

4. Suspension according to Claim 1, **characterised in that** with their lateral outside faces the arm sections (221, 222 and 231, 232) of the two arms (22, 23) of the 4-point stabiliser arm (21) merge with each other via grooves (33, 34, 35, 36) provided in the outside area of the cross central area (24).

5. Suspension according to Claim 1, **characterised in that** the 4-point stabiliser arm (21) is connected to the frame (1, 2, 3) and the rigid axle (4) via four claw-type joints (25, 26, 27, 28), each of which is installed in one of the four bearing eyes (223, 224, and 233, 234), the axes of the two axle-mounted claw-type joints (27, 28) in the bearing eyes (224, 234) being aligned with each other in one line parallel to the longitudinal centre axis of the rigid axle (4), whereas in each of the bearing eyes (223, 233) housing the two frame-mounted claw-type joints (25, 26) the axes of the two said claw-type joints (25, 26) are, in relation to the vehicle's central longitudinal vertical plane passing through the centre of the cross central area (24), arranged mirror-symmetrically either in perpendicular position or at a slightly acute angle in relation to the longitudinal centre axis of the respective arm (22, 23) and of the frame-mounted arm section (221, 231).

6. Suspension according to Claim 1, **characterised in that** the vehicle's central longitudinal vertical plane passes through the centre of the cross central area (24) of the 4-point stabiliser arm (21) whose two halves on both sides of the vehicle's central longitudinal vertical plane are designed mirror-symmetrically in relation to said plane.

**Revendications**

1. Suspension d'un essieu rigide d'un véhicule, notamment d'un véhicule utilitaire tel qu'un camion ou un autocar, comprenant de chaque côté du véhicule, un longeron (17, 18) articulé à une certaine hauteur d'un côté au corps d'essieu rigide (5) et de l'autre au châssis (1, 2, 3) du véhicule, ainsi qu'un bras de stabilisateur en une seule pièce et à 4 points (21) conçu pour trois fonctions à savoir : recevoir la force longitudinale, recevoir la force latérale et stabiliser le roulis, et formé de deux bras croisés, (22, 23) placés dans un plan, avec à chaque extrémité un oeillet de palier recevant une articulation par laquelle le bras est relié à une extrémité à l'essieu rigide à une hauteur de position différente du point d'articulation des bras longitudinaux et de l'autre côté est articulé à un point solidaire du châssis,
**caractérisée en ce que**

le bras de stabilisateur à 4 points (21) est formé par une pièce forgée en une seule partie dont les bras croisés (22, 23),

- se rejoignent l'un l'autre dans la zone centrale de croisement (24),
- sont conçus très largement à la manière de ressorts paraboliques correspondant à une poutre de flexion de même rigidité et de même tension marginale,
- ont de part et d'autre de la zone d'intersection centrale (24) représentant la partie la plus épaisse, dans les sections de bras concernées (221, 222 ou 231, 232) une section essentiellement rectangulaire, de dimension variable suivant la longueur, diminuant vers l'oeillet de palier extérieur respectif (223, 224 ou 233, 234), et
- induisent des forces normales dans la zone centrale d'intersection (24) pour stabiliser le roulis.

2. Suspension selon la revendication 1,
   **caractérisée en ce que**
   les deux segments (221, 222 ou 231, 232) de chaque bras (22, 23) du bras de stabilisateur à 4 points (21), qui sont adjacents des deux côtés de la zone centrale d'intersection (24), sont sensiblement au moins alignés dans la direction longitudinale des bras.

3. Suspension selon la revendication 1,
   **caractérisée en ce que**
   la zone centrale d'intersection (24) du bras de stabilisateur à 4 points (21) se trouve sensiblement au milieu de l'extension longitudinale à partir de ses deux bras (22, 23).

4. Suspension selon la revendication 1,
   **caractérisée en ce que**
   les segments de bras (221, 222 ou 231, 232) des deux bras (22, 23) du bras de stabilisateur à 4 points (21) rejoignent par leur surface d'appui latérale, au niveau de la zone extérieure de la zone centrale d'intersection (24), des cavités données (33, 34, 35, 36).

5. Suspension selon la revendication 1,
   **caractérisée en ce que**
   le branchement du bras de stabilisateur à 4 points (21) sur le châssis (1, 2, 3) et l'essieu rigide (4) se fait par quatre articulations à griffes (25, 26, 27, 28) dont chacune est montée dans l'un des quatre oeillets de palier (223, 224 ou 233, 234),
   les axes des deux articulations à griffes (27, 28) du côté de l'axe dans les oeillets de palier (224, 234) sont alignés suivant une ligne parallèle à l'axe longitudinal médian de l'essieu rigide (4) alors que les axes des deux articulations à griffes (25, 26) situées du côté du châssis, se trouvent dans l'oeillet de palier respectif (223, 233) rapporté au plan central longitudinal vertical du véhicule passant par le milieu de la zone centrale d'intersection (24), de manière symétrique plane ou avec un léger angle aigu par rapport à l'axe médian longitudinal du bras respectif (22, 23) ou du segment de bras (221, 231) du côté du châssis.

6. Suspension selon la revendication 1,
   **caractérisée en ce que**
   le plan médian vertical longitudinal du véhicule passe par le centre de la zone centrale d'intersection (24) du bras stabilisateur à 4 points (21) et ces deux moitiés données de part et d'autre du plan médian longitudinal moyen vertical sont réalisées de manière symétrique par rapport à ce plan.

**Fig. 1**

# Fig.2

# Fig.3

Fig. 4